# FASCICULE DE BREVET EUROPEEN

(11) **EP 3 182 112 B1**
(45) Date de publication et mention de la délivrance du brevet: **07.06.2023**
(21) Numéro de dépôt: 15200192.1
(22) Date de dépôt: 15.12.2015
(51) Int. Cl.: G01N 27/90, B61K 9/10

(54) **VEHICULE FERROVIAIRE ET PROCÉDÉ DE REPÉRAGE DE DÉFAUTS OU D'IRRÉGULARITÉS À LA SURFACE DE RAILS DE CHEMIN DE FER**
SCHIENENFAHRZEUG UND VERFAHREN ZUM ERFASSEN VON STÖRUNGEN ODER UNREGELMÄSSIGKEITEN AN DER OBERFLÄCHE VON EISENBAHNSCHIENEN
RAIL VEHICULE AND METHOD FOR LOCATING DEFECTS OR IRREGULARITIES ON THE SURFACE OF RAILWAY RAILS

(43) Date de publication de la demande: 21.06.2017
(73) Titulaire: Speno International SA, 1202 Geneve (CH)
(72) Inventeur: PALMIERI, Luca, 1180 Rolle (CH); ISELY, Yvan, 1006 Lausanne (CH); CARCHIA, Vittorio, 1219 Châtelaine (CH)
(74) Mandataire: Micheli & Cie SA

(56) Documents cités:
- DE-A1- 10 025 066
- US-A- 4 562 349
- US-A- 5 130 652
- US-A1- 2004 089 082
- US-A1- 2014 305 217
- MANISH RAJ ET AL: "Non-Destructive Testing and Inspection of Rails at JSPL - Ensuring Safety and Reliability", 18TH WORLD CONFERENCE ON NONDESTRUCTIVE TESTING, 20 avril 2012 (2012-04-20), XP055273897,

## Description

La présente invention a pour objet un véhicule ferroviaire, à savoir un véhicule de meulage ou de reprofilage de rails ou une draisine, ainsi qu'un procédé de repérage de défauts ou d'irrégularités à la surface de rails de chemin de fer.

Le passage répété du matériel roulant génère des efforts importants sur la zone de roulement des rails. Ces efforts dépendent des caractéristiques du rail, du type de matériel roulant et d'autres paramètres opérationnels comme la vitesse des véhicules. Ces efforts entraînent une usure des rails et en particulier des fissures sur la zone de roulement. Les rails de chemin de fer sont donc régulièrement inspectés pour repérer d'éventuels défauts ou irrégularités à la surface de la zone roulement dans le but de planifier un éventuel entretien en temps utile (reprofilage ou remplacement des rails).

Cette inspection a longtemps été visuelle uniquement, réalisée par du personnel qualifié qui en se déplaçant le long des voies pouvait relever les défauts visibles sur les rails. On a ensuite développé des systèmes de contrôle électromagnétiques ou par ultrasons.

Les dispositifs actuels tels que ceux décrits dans EP 0 159 933 et DE 100 25 066 utilisent une sonde à courants de Foucault. En général, cette sonde est placée sur un chariot qui permet de la déplacer le long du rail à examiner. La sonde est constituée d'une bobine alimentée par un courant électrique alterné. La bobine produit alors un champ magnétique oscillant à la même fréquence que le courant alimentant la bobine. Lorsque la bobine approche un matériau conducteur comme celui d'un rail de chemin de fer, des courants opposés à ceux traversant la bobine sont générés dans le matériau. Ces courants sont appelés courants de Foucault. Des variations dans la conductivité électrique ou de la perméabilité magnétique de l'objet à tester et la présence d'irrégularités à la surface dudit objet entraînent une variation des courants de Foucault. A ces variations correspondent des variations de phase et d'amplitude qui peuvent être détectées en mesurant le changement d'impédance dans la bobine. Ces signaux de mesure sont traités par des moyens électroniques et informatiques et transmis à l'utilisateur qui est ainsi informé de la présence de défauts ou d'irrégularités et de leurs caractéristiques (par exemple la profondeur des fissures).

Un inconvénient des systèmes connus réside dans le fait qu'en ne se déplaçant que longitudinalement par rapport au rail, la sonde ne permet pas de déceler certaines fissures présentant une orientation particulière, essentiellement parallèle au sens de déplacement de la sonde. Par exemple, le dispositif selon DE 100 25 066 ne permet pas de détecter les fissures parallèles à l'axe longitudinal du rail.

En outre, les dispositifs connus permettent d'inspecter une zone assez restreinte du rail définie par le diamètre de la sonde. Il n'est en général pas possible de contrôler en un passage toute la surface du sommet du champignon du rail ou toute la zone de roulement.

De plus, avec les dispositifs connus, il est nécessaire de procéder à un étalonnage de la sonde avant toute utilisation du dispositif. Cet étalonnage est réalisé en inspectant une portion de rail témoin qui ne présente ni défauts ni irrégularités. Cette opération de calibrage du dispositif devrait être répétée le plus régulièrement possible. Il est également préférable que les caractéristiques du rail témoin soient les plus proches possibles de celles du rail à contrôler (type de matériau, dureté, ...), sous peine de rendre la mesure peu fiable.

Enfin, avec un dispositif traditionnel, la sonde se déplace en translation le long du rail et il a été constaté que le sens de marche du matériel roulant sur les rails de chemin de fer à contrôler pouvait également influencer le résultat de la mesure.

La présente invention a donc pour but de fournir un dispositif de repérage de défauts ou irrégularités à la surface de rails de chemin de fer utilisant les courants de Foucault mais obviant aux inconvénients précités et qui permette de détecter de manière sûre et efficace les défauts à la surface du rail, tout en restant simple à utiliser.

La présente invention a pour objet un véhicule ferroviaire, à savoir un véhicule de meulage ou de reprofilage de rails ou une draisine, le véhicule comprenant un dispositif de repérage des défauts ou d'irrégularités à la surface d'un rail de chemin de fer comprenant un support portant au moins une sonde à courants de Foucault, et caractérisé par le fait que ce dispositif est agencé pour déplacer la sonde à courants de Foucault par rapport au support selon un mouvement de rotation ou d'oscillation.

La présente invention a également pour objet un procédé de repérage de défauts ou d'irrégularités à la surface de rails de chemin de fer mis en oeuvre à l'aide d'un dispositif de repérage de défauts ou d'irrégularités à la surface de rails de chemin de fer comprenant au moins une sonde à courants de Foucault, le dispositif de repérage de défauts ou d'irrégularités étant monté sur un véhicule de meulage ou de reprofilage des rails ou une draisine, le procédé étant caractérisé par le fait qu'il comprend les étapes suivantes :
- Régler la position de la sonde à courants de Foucault par rapport à la surface du rail à contrôler;
- Communiquer à la sonde à courants de Foucault un mouvement de rotation ou d'oscillation dans un plan essentiellement parallèle à la surface du rail à contrôler ;
- Déplacer la sonde à courants de Foucault le long du rail ;
- Repérer les défauts ou irrégularités à la surface du rail en analysant les données fournies par la sonde à courants de Foucault.

Les figures annexées décrivent schématiquement et à titre d'exemple une forme d'exécution du dispositif de repérage de défauts ou d'irrégularités à la surface de rails de chemin de fer selon l'invention.
La figure 1 illustre une portion de rail de chemin de fer comportant des irrégularités ou défauts devant être repérés par le dispositif selon l'invention.
La figure 2 illustre schématiquement le dispositif de repérage selon l'invention.
La figure 3 illustre schématiquement des variantes du dispositif selon l'invention.
Les figures 4a et 4b illustrent le déplacement de la sonde à la surface d'un rail de chemin de fer selon une première, respectivement une seconde variante du dispositif selon l'invention.

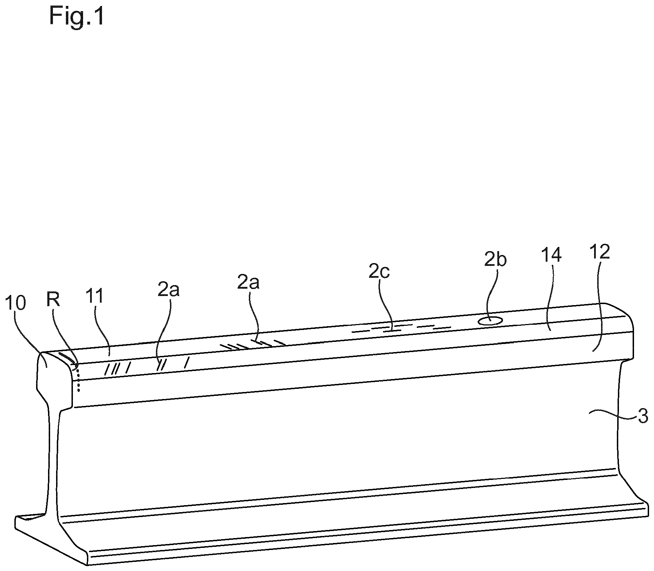

Le dispositif 1 selon l'invention est destiné à repérer les irrégularités ou défauts 2 à la surface d'un rail de chemin de fer 3. Un tel rail 3 est illustré à la figure 1 et comprend une tête ou champignon 10. Le champignon 10 est formé d'un sommet 11, d'un côté intérieur 12 et d'un côté extérieur 13. Une voie est composée de deux rails 3 disposés en parallèle.

Les roues du matériel roulant prennent appui sur le champignon 10 du rail 3 sur une zone appelée zone de roulement R. La zone de roulement R illustrée en gras (bande de roulement) et en pointillé (congé de roulement) dans les figures s'étend sur une portion du sommet 11 et du côté intérieur 12 du champignon 10. Dans les courbes ou dans le cas où le matériel roulant n'est pas stable, la zone de roulement R peut déborder sur l'angle intérieur 14 du champignon 10 (cet angle correspond au congé de roulement) et sur une portion du côté intérieur 12 du champignon. Ce débordement de la zone de roulement R est illustré en pointillé dans les figures. On considère qu'il n'y a pas d'appui sur le côté extérieur 13 et sur la portion du sommet 11 du champignon 10 adjacente audit côté extérieur 13.

Les irrégularités ou défauts suivants peuvent apparaître à la surface du champignon 10 du rail de chemin de fer 3 et plus particulièrement sur la zone de roulement R et l'angle intérieur 14.

Des fissures du type head check 2a sont des petites fissures parallèles situées sur la zone de roulement R sur le sommet 11 du champignon 10 à proximité ou sur l'angle intérieur 14. Elles sont généralement inclinées dans le sens de marche et dirigées du sommet 11 du champignon 10 vers le pied du rail 3.

Des impacts du type Belgrospi présents sur le sommet 11 du champignon 10 peuvent se développer suite au passage de véhicule à grande vitesse (> 160km/h) et sur un rail affecté par de l'usure ondulatoire (zones présentant des irrégularités et réparties de manière quasi-périodique le long du rail). Ces impacts qui apparaissent sur les zones d'usure ondulatoire peuvent évoluer et se transformer en squats.

Les squats 2b désignent des taches d'usure noirâtres en forme d'assiette sur le sommet 11 du champignon 10 au voisinage desquelles la zone de roulement R et en particulier l'angle intérieur 14 s'affaissent ou s'élargissent. Sous ces squats se crée un réseau de fissures qui s'étendent à partir de deux fissures principales horizontales et qui peuvent conduire à une rupture du rail 3.

Des fissures du type « spalling » apparaissent en réseau sur le sommet 11 du champignon 10. Ces fissures sont parallèles à l'axe longitudinal du rail 3 et reliées par des fissures transversales. Elles sont repérables à l'œil nu car elles laissent apparaître un dessin en peau de serpent sur le sommet 11 du champignon 10. Ces fissures du type spalling peuvent entraîner une perte de matière ou un délaminage du rail 3.

Enfin, des empreintes de patinage peuvent apparaître sur les portions de rails où le matériel roulant démarre. Ces empreintes de patinage créent des dommages au rail en s'attaquant à l'acier dont la couche supérieure se transforme pour former des lentilles de martensite. La martensite étant plus fragile que l'acier sous sa forme austénite, ces lentilles s'écaillent avec le passage répété du matériel roulant entraînant la formation de trous ou creusures à la surface du rail.

Le dispositif selon l'invention a donc pour mission de repérer ces irrégularités, quels que soient leur type et leur orientation à la surface de roulement R d'un rail de chemin de fer 3 pour permettre à l'homme du métier de planifier l'entretien du rail (reprofilage ou changement).

Le dispositif 1 de repérage de défauts ou d'irrégularités à la surface d'un rail de chemin de fer selon l'invention est un dispositif à courants de Foucault et comprend une sonde à courants de Foucault 4 montée sur un porte-sonde 5 lui-même fixé sur un support 6. Le dispositif 1 et en particulier le support 6 est agencé pour être déplaçable en translation par rapport au rail 3. A cet effet, il est monté sur un véhicule de meulage, de reprofilage des rails ou une draisine. De préférence, le support 6 et le dispositif 1 selon l'invention sont placés sur un véhicule de meulage ou de reprofilage des rails.

La sonde 4 et le porte-sonde 5 sont reliés à des moyens de traitement 7 destinés à commander ladite sonde 4 et à traiter les signaux émis par celle-ci. Les moyens de traitement 7 sont eux-mêmes connectés à une interface utilisateur 8 permettant d'afficher les résultats générés par les moyens de traitement 7 et donc d'afficher les éventuelles irrégularités repérées par la sonde 4.

Le porte-sonde 5 est mobile par rapport au support 6. Il est en particulier agencé par rapport au support 6 pour permettre le réglage de la position de la sonde 4 par rapport au rail 3 et en particulier la distance et l'inclinaison entre le rail 3 et la sonde 4.

La particularité du dispositif 1 selon l'invention réside dans le fait que le porte-sonde 5 et la sonde 4 sont également mobiles en rotation ou en oscillation par rapport au support 6. Pour ce faire, le dispositif 1 selon l'invention peut comprendre des moyens d'entraînement du porte-sonde 5 portés par le support 6 et commandés par les moyens de traitement 7 et destinés à faire tourner le porte-sonde 5 et la sonde 4 par rapport au support 6 ou à leur communiquer un mouvement de va-et-vient oscillant. Tous moyens d'entraînement appropriés peuvent être utilisés pour mettre la sonde 4 et le porte-sonde 5 en mouvement.

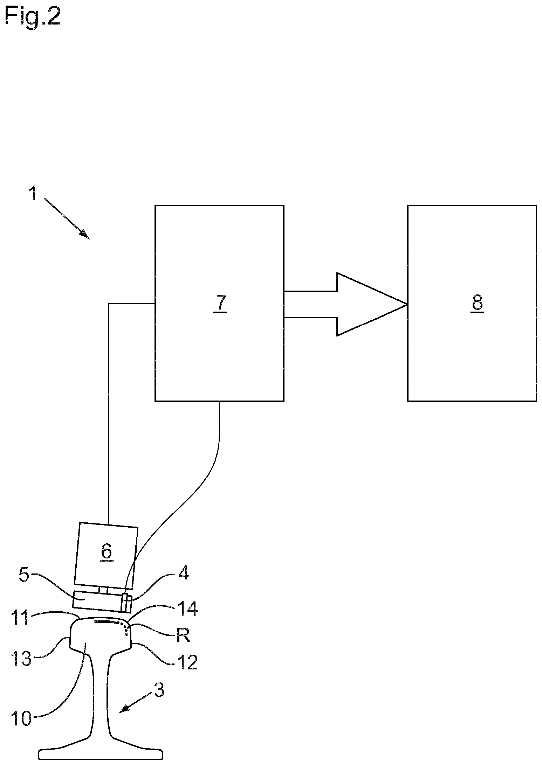

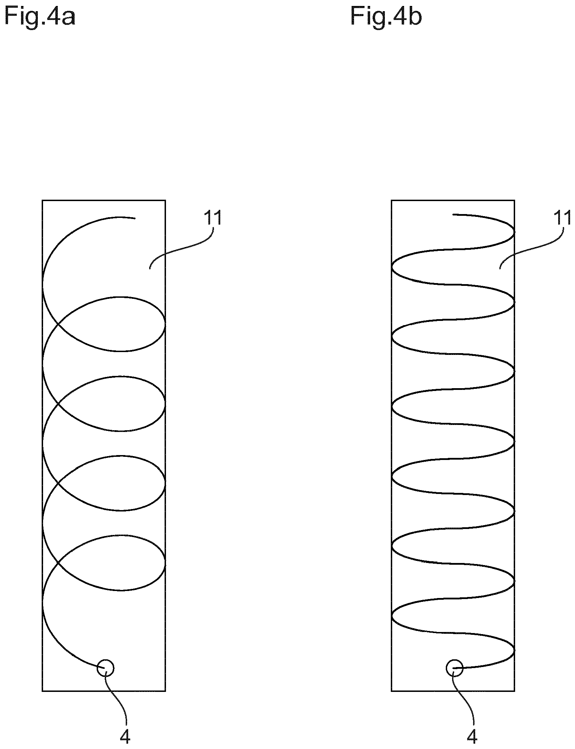

La combinaison de ce mouvement de rotation ou oscillation avec le mouvement de translation le long du rail 3 implique que la trace de la sonde 4 lorsque le dispositif 1 se déplace le long du rail 3 n'est plus une simple ligne déterminée par le diamètre de la sonde 4 comme dans l'art antérieur mais une courbe d'allure trochoïde (figure 4a) ou un d'allure sinusoïde (figure 4b). Ainsi, en s'assurant que la vitesse de rotation ou d'oscillation de la sonde 4 est plus grande que la vitesse de translation du dispositif 1 le long du rail 3, la trace de la sonde 4 couvre toute une surface comprise entre les positions extrêmes de la sonde 4 lors de sa rotation ou ses oscillations. Le dispositif 1 offre ainsi une zone d'inspection beaucoup plus grande que les dispositifs connus. Avec un dispositif tel qu'illustré à la figure 2, il est notamment possible d'inspecter tout le sommet 11 du champignon 10 en un seul passage.

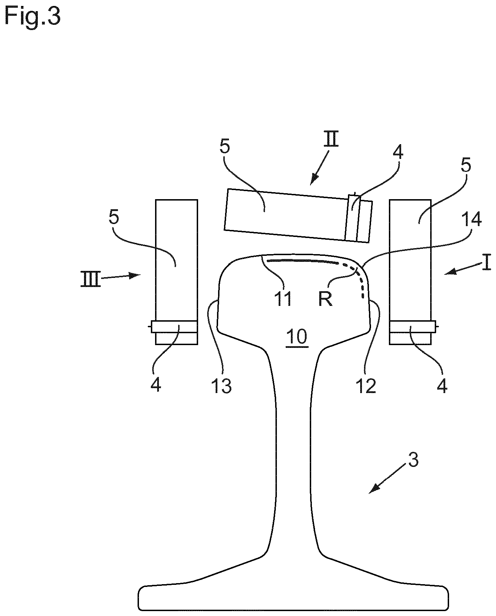

Pour procéder à l'inspection d'un rail 3 à l'aide du dispositif 1 selon l'invention, il faut commencer par ajuster la position de la sonde 4 par rapport à la surface du rail 3 à examiner. La figure 3 illustre trois positionnements possibles de la sonde 4 et du porte-sonde 5 par rapport au rail 3. Dans la position II, la sonde 4 et son porte-sonde 5 sont agencés pour inspecter le sommet 11 du champignon 10 du rail 3 tandis que dans les positions I et III, ils sont agencés pour inspecter respectivement le côté intérieur 12 et le côté extérieur 13 du champignon 10 du rail 3.

Une fois la position de la sonde 4 et du porte-sonde 5 ajustée par rapport au rail 3 et à la surface de celui-ci à examiner, la sonde 4 et le porte-sonde 5 sont mis en mouvement circulaire ou oscillant dans un plan essentiellement parallèle à la surface du rail 3 à examiner (essentiellement parallèle au sommet 11 du champignon 10 pour la position II, parallèle au côté 12 ou 13 du champignon 10 pour les positions I et III). Le dispositif 1 est ensuite déplacé en translation le long du rail 3.

Les signaux émis par la sonde 4 sont traités par les moyens de traitement 7 et les résultats obtenus transmis l'interface utilisateur 8.

Le dispositif selon l'invention permet de repérer davantage de fissures qu'un dispositif traditionnel. En effet, avec la rotation ou l'oscillation de la sonde 4, les courants de Foucault générés à la surface du rail suivent différentes orientations ce qui permet de repérer les fissures et autres irrégularités avec plus de précision quelles que soient leur orientation ou leur forme.

L'utilisation d'une sonde à courants de Foucault 4 permet également de détecter les changements de qualité de l'acier du rail 3 comme la formation de martensite due aux empreintes de patinage.

Comme mentionné plus haut, les mouvements rotatifs ou oscillants de la sonde combinés à un mouvement de translation permettent de rendre possible le balayage du sommet 11 du champignon 10 du rail 3 ou du côté 12/13 dudit champignon 10 en un passage du dispositif 1 le long du rail. Il est également possible de paramétrer les moyens de traitement 7 et l'interface utilisateur 8 pour utiliser les informations fournies par la sonde 4 pour non seulement détecter les irrégularités mais aussi établir un profil géométrique de la surface balayée. En effet, avec le dispositif selon l'invention, la zone de balayage est suffisamment grande pour que les informations liées à son profil géométrique soient intéressantes et puissent être comparées ensuite à un profil géométrique de contrôle, la comparaison permettant de définir s'il est nécessaire de remplacer ou reprofiler la portion du rail 3 contrôlée.

Le dispositif 1 selon l'invention présente encore l'avantage de permettre un étalonnage quasi-continu de la sonde sur la base du rail devant être contrôlé et non plus d'un morceau de rail témoin dont les caractéristiques sont potentiellement différentes. En effet, comme le dispositif 1 selon l'invention permet de balayer une zone plus grande à la surface du rail, il est envisageable que la zone de contrôle balayée par le dispositif recouvre en partie la zone de roulement R et une zone du rail sur laquelle il n'y a pas de roulement et qui est donc dépourvue de défauts (en dehors de la zone de roulement R). Les moyens de traitement 7 peuvent être paramétrés pour identifier cette zone sans roulement et effectuer un étalonnage de la sonde à chaque passage de celle-ci sur ladite zone sans roulement. Ainsi, on obtient un étalonnage très précis et facile puisqu'il ne faut plus se munir d'un morceau de rail témoin. De plus, l'étalonnage prend alors en compte les caractéristiques réelles du rail à contrôler.

Le dispositif décrit ci-dessus et illustré aux figures comprend une seule sonde 4 à courants de Foucault. En variante, plusieurs sondes 4 pourraient être fixées sur le même porte-sonde 5 dans le but de permettre un balayage multiple de la même surface. Cette redondance permet de fiabiliser encore davantage la détection d'irrégularités ou de défauts à la surface du rail.

Dans une autre variante, le porte-sonde 5 pourrait comprendre plusieurs sondes présentant des caractéristiques différentes (comme des diamètres différents). Par exemple, une première sonde à courants de Foucault pourrait être spécialement destinée à établir le profil géométrique de la surface à contrôler, tandis qu'une autre sonde à courants de Foucault pourrait être chargée du repérage des fissures proprement dite.

En variante encore, le dispositif pourrait comprendre plusieurs porte-sonde 5 portant chacun au moins une sonde 4 à courants de Foucault et agencés pour couvrir chacun une zone spécifique du rail : par exemple un porte-sonde porte la ou les sondes destinées à balayer le sommet 11 du champignon 10 du rail 3, tandis que deux autres porte-sondes 5 sont agencés pour que leur sonde 4 balaye respectivement le côté intérieur 12 et le côté extérieur 13 du champignon 10 du rail 3. En d'autres termes, l'agencement de la figure 3 pourrait être celui d'un unique dispositif avec trois porte-sonde 5 reliés à un support 6 et aux moyens de traitement 7. Cette variante permettrait d'inspecter tout le champignon 10 en un seul passage.

On réalise ainsi un dispositif de repérage des défauts ou irrégularités à la surface d'un rail de chemin de fer qui présente de nombreux avantages par rapport aux dispositifs connus sans augmenter la complexité de son utilisation.

Le dispositif permet de gagner en efficacité et en temps puisque la zone balayée par le dispositif de repérage selon l'invention peut être beaucoup plus importante qu'avec un dispositif connu. Il est également possible d'améliorer l'étalonnage de la ou des sondes utilisées dans le dispositif tout en le rendant plus rapide et moins fastidieux.

De plus, le dispositif selon l'invention offre de meilleurs résultats et une meilleure efficacité dans le repérage des défauts à la surface du rail, puisque la détection des fissures ne dépend plus de leur orientation (les fissures du type head check sont détectées, de même que les fissures longitudinales du types spalling).

Le dispositif peut également identifier une modification de la structure métallurgique du rail telle que la martensite.

En outre, le dispositif selon l'invention permet également de repérer des irrégularités dans le profil géométrique de la surface du rail puisque le mouvement rotatif ou oscillant de la sonde 4 permet de balayer une zone plus importante du rail que l'on peut ensuite comparer à un profil géométrique de contrôle.

## Revendications

1. Véhicule ferroviaire, à savoir véhicule de meulage ou de reprofilage de rails ou draisine, le véhicule comprenant un dispositif de repérage de défauts ou d'irrégularités à la surface de rails de chemin de fer comprenant un support (6) portant au moins une sonde à courants de Foucault (4), et **caractérisé par le fait que** ce dispositif est agencé pour déplacer la sonde à courants de Foucault (4) par rapport au support (6) selon un mouvement de rotation ou d'oscillations.

2. Véhicule ferroviaire selon la revendication 1, **caractérisé par le fait que** le dispositif comprend un porte-sonde (5) connecté au support (6) et sur lequel est fixé la sonde à courants de Foucault (4), le porte-sonde (5) étant mobile en rotation ou en oscillation par rapport au support (6).

3. Véhicule ferroviaire selon la revendication 2, **caractérisé par le fait que** le dispositif comprend une ou plusieurs sondes à courants de Foucault (4) agencées sur le même porte-sonde (5).

4. Véhicule ferroviaire selon la revendication 2, **caractérisé par le fait que** le dispositif comprend plusieurs porte-sonde (5), portant chacun au moins une sonde à courants de Foucault (4).

5. Véhicule ferroviaire selon l'une des revendications précédentes, **caractérisé par le fait qu'**il comprend des moyens de traitement (7) connectés à la sonde à courants de Foucault (4) pour traiter les signaux émis par ladite sonde (4) et une interface utilisateur pour l'affichage des résultats générés par les moyens de traitement.

6. Procédé de repérage de défauts ou d'irrégularités à la surface de rails de chemin de fer mis en oeuvre à l'aide d'un dispositif de repérage de défauts ou d'irrégularités à la surface de rails de chemin de fer comprenant au moins une sonde à courants de Foucault (4), le dispositif de repérage de défauts ou d'irrégularités étant monté sur un véhicule de meulage ou de reprofilage des rails ou une draisine, le procédé étant **caractérisé par le fait qu'**il comprend les étapes suivantes :
• Régler la position de la sonde à courants de Foucault (4) par rapport à la surface du rail à contrôler;
• Communiquer à la sonde à courants de Foucault (4) un mouvement de rotation ou d'oscillation dans un plan essentiellement parallèle à la surface du rail à contrôler ;
• Déplacer la sonde à courants de Foucault (4) le long du rail ;
• Repérer les défauts ou irrégularités à la surface du rail en analysant les données fournies par la sonde à courants de Foucault (4).

7. Procédé selon la revendication précédente 6, comprenant en outre une étape d'étalonnage consistant à
• Identifier le long de la surface du rail à contrôler une zone témoin sans défauts ;
• Étalonner la sonde à courants de Foucault (4) lors du passage de la sonde (4) au-dessus de la zone témoin sans défauts.

## Patentansprüche

1. Schienenfahrzeug, nämlich Schienenschleif- oder - aufbereitungsfahrzeug oder Draisine, wobei das Fahrzeug eine Vorrichtung zum Erfassen von Mängeln oder von Unregelmäßigkeiten an der Fläche von Eisenbahnschienen umfasst, die einen Halter (6) umfasst, der mindestens eine Sonde (4) für Foucaultsche Ströme trägt, und **dadurch gekennzeichnet, dass** die Vorrichtung gestaltet ist, um die Sonde (4) für Foucaultsche Ströme in Bezug auf den Halter (6) gemäß einer Dreh- oder Schwingungsbewegung zu verlagern.

2. Schienenfahrzeug nach Anspruch 1, **dadurch gekennzeichnet, dass** die Vorrichtung einen Sondenträger (5) umfasst, der mit dem Halter (6) verbunden ist und an dem die Sonde (4) für Foucaultsche Ströme befestigt ist, wobei der Sondenträger (5) in Bezug auf den Halter (6) dreh- oder schwingbeweglich ist.

3. Schienenfahrzeug nach Anspruch 2, **dadurch gekennzeichnet, dass** die Vorrichtung eine oder mehrere Sonden (4) für Foucaultsche Ströme umfasst, die an demselben Sondenträger (5) angeordnet sind.

4. Schienenfahrzeug nach Anspruch 2, **dadurch gekennzeichnet, dass** die Vorrichtung mehrere Sondenträger (5) umfasst, die jeweils mindestens eine Sonde (4) für Foucaultsche Ströme tragen.

5. Schienenfahrzeug nach einem der vorhergehenden Ansprüche, **dadurch gekennzeichnet, dass** es Verarbeitungsmittel (7), die mit der Sonde (4) für Foucaultsche Ströme verbunden sind, um die von der Sonde (4) gesendeten Signale zu verarbeiten, und eine Benutzeroberfläche zur Anzeige der durch die Verarbeitungsmittel erzeugten Ergebnisse umfasst.

6. Verfahren zum Erfassen von Mängeln oder von Unregelmäßigkeiten an der Fläche von Eisenbahnschienen, das mittels einer Vorrichtung zum Erfassen von Mängeln oder von Unregelmäßigkeiten an der Fläche von Eisenbahnschienen durchgeführt wird, die mindestens eine Sonde (4) für Foucaultsche Ströme umfasst, wobei die Vorrichtung zum Erfassen von Mängeln oder von Unregelmäßigkeiten an einem Schienenschleif- oder -aufbereitungsfahrzeug oder einer Draisine montiert ist, wobei das Verfahren **dadurch gekennzeichnet ist, dass** es die folgenden Schritte umfasst:
• Regeln der Position der Sonde (4) für Foucaultsche Ströme in Bezug auf die zu kontrollierende Fläche der Schiene;
• Kommunizieren einer Dreh- oder Schwingungsbewegung in einer Ebene, die im Wesentlichen parallel zu der zu kontrollierenden Fläche der Schiene ist, an die Sonde (4) für Foucaultsche Ströme;
• Verlagern der Sonde (4) für Foucaultsche Ströme entlang der Schiene;
• Erfassen von Mängeln oder Unregelmäßigkeiten an der Fläche der Schiene durch Analysieren der durch die Sonde (4) für Foucaultsche Ströme gelieferten Daten.

7. Verfahren nach Anspruch 6, das ferner einen Eichungsschritt umfasst, der in Folgendem besteht:
• Identifizieren einer Vergleichszone ohne Mängel entlang der zu kontrollierenden Fläche der Schiene;
• Eichen der Sonde (4) für Foucaultsche Ströme bei der Durchfahrt der Sonde (4) über der Vergleichszone ohne Mängel.

## Claims

1. Rail vehicle, namely a vehicle for grinding or reprofiling rails or a draisine, the vehicle comprising a device for locating defects or irregularities on the surface of railway rails, comprising a support (6) bearing at least one eddy current probe (4), and **characterised in that** this device is arranged to move the eddy current probe (4) with respect to the support (6) in a rotational or oscillating movement.

2. Rail vehicle as claimed in claim 1, **characterised in that** the device comprises a probe holder (5) connected to the support (6) and on which the eddy current probe (4) is fixed, the probe holder (5) being able to rotate or oscillate with respect to the support (6).

3. Rail vehicle as claimed in claim 2, **characterised in that** the device comprises one or more eddy current probes (4) arranged on the same probe holder (5).

4. Rail vehicle as claimed in claim 2, **characterised in that** the device comprises a plurality of probe holders (5) each carrying at least one eddy current probe (4).

5. Rail vehicle as claimed in any one of the preceding claims, **characterised in that** it comprises processing means (7) connected to the eddy current probe (4) to process the signals emitted by said probe (4) and a user interface for displaying the results generated by the processing means.

6. Method for locating defects or irregularities on the surface of railway rails carried out with the aid of a device for locating defects or irregularities on the surface of railway rails, comprising at least one eddy current probe (4), the device for locating defects or irregularities being mounted on a vehicle for grinding or reprofiling the rails or a draisine, the method being **characterised in that** it comprises the following steps:
• adjusting the position of the eddy current probe (4) with respect to the surface of the rail to be checked;
• communicating to the eddy current probe (4) a rotational or oscillating movement in a plane substantially parallel to the surface of the rail to be checked;
• moving the eddy current probe (4) along the rail;
• locating the defects or irregularities on the surface of the rail by analysing the data provided by the eddy current probe (4).

7. Method as claimed in the preceding claim 6, further comprising a calibrating step consisting of
• identifying a defect-free control zone along the surface of the rail to be checked;
• calibrating the eddy current probe (4) during passage of the probe (4) over the defect-free control zone.
